(19) Europäisches Patentamt
European Patent Office
Office européen des brevets

(11) Publication number: 0 161 882 B1

(12) EUROPEAN PATENT SPECIFICATION

(45) Date of publication of patent specification: 30.08.89

(51) Int. Cl.[4]: B 01 J 20/26, C 08 F 20/54, C 08 F 8/00

(21) Application number: 85303162.3

(22) Date of filing: 03.05.85

# (54) Adsorption-desorption method for the separation of water soluble organic compounds from aqueous solution.

(30) Priority: 07.05.84 JP 89315/84

(43) Date of publication of application: 21.11.85 Bulletin 85/47

(45) Publication of the grant of the patent: 30.08.89 Bulletin 89/35

(84) Designated Contracting States: CH DE FR GB IT LI NL SE

(56) References cited:
EP-A-0 079 842
EP-A-0 163 404
FR-A-2 553 678

(73) Proprietor: MITSUI TOATSU CHEMICALS, Inc.
2-5 Kasumigaseki 3-chome
Chiyoda-Ku Tokyo 100 (JP)

(72) Inventor: Itoh, Hiroshi
521, Kasamacho Totsuka-ku
Yokohama Kanagawa-ken (JP)
Inventor: Nitta, Atsuhiko
634-1-154, Nobacho Kohnan-ku
Yokohama Kanagawa-ken (JP)
Inventor: Tanaka, Tomio
8-14-2, Aoto Katsushika-ku
Tokyo (JP)

(74) Representative: Harvey, David Gareth et al
Graham Watt & Co. Riverhead
Sevenoaks Kent TN13 2BN (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 161 882 B1

## Description

This invention relates to improvements in separation of water soluble organic compounds from aqueous solution, more specifically wherein an adsorbent the adsorbability of which increases when heated but decreases upon cooling is employed.

Activated carbon has been used extensively for the recovery of valuable materials or the removal of impurities or pollutants from solutions such as aqueous solutions and for other purposes. Adsorbents making use of an nonionic styrene-divinylbenzene copolymer as their base materials have been developed in recent years. Many investigations are now under way with a view toward using them in a wide variety of fields. Since the base material, i.e., the styrene-divinylbenzene copolymer contains an aromatic ring having extremely strong hydrophobicity, the elution of materials adsorbed on the adsorbents is effected using an acidic or alkaline solution as an eluent or with various organic polar solvents. However, such elution methods develop various problems when eluting materials susceptible to alteration in quality or nature by heat, acids, bases, organic solvents or the like. Such materials include physiologically-active substances including antibiotics, vitamins, enzymes, proteins, steroids and the like. If the adsorption and elution are effected at different temperatures, it is necessary to perform the adsorption at a low temperature and the desorption at a higher temperature because the adsorbability decreases when heated. Furthermore, no substantial difference in adsorbability occurs even when the temperature is changed. It is accordingly indispensible to make the elution conditions for the above elution methods severe in order to carry out the adsorption and separation with good efficiency. Thus, contamination of eluates with eluents is unavoidable. When removing contaminants or impurities from a valuable material on the other hand, it is difficult selectively to remove such unnecessary materials only from the valuable material. A significant loss of the valuable material results because the base material contains aromatic rings of extremely high hydrophobicity and under the circumstances its hydrophobicity cannot be fully controlled. In the case of substances having water solubility but relatively-high hydrophobicity such as proteins or antibiotics, non-specific and irreversible adsorption may take place on the adsorbent. This remains as one problem causing contamination of the adsorbent.

It has recently been disclosed to use a polymer of an N-substituted acrylamide derivative as a base material for an ion-exchange resin in Japanese Patent Laid-open Nos. 105,758/1981 and 96,615/1983 as well as "Biopolymers", *22*, 839—847 (1983). The ion-exchange resin has been known to have such a property that it may be used even for aqueous solutions containing electrolytes at high concentrations and for various organic solvents.

For many years, compounds have been known having temperature-dependent hydrophobicity, in other words, cloud points when converted into organic polymers. Some attempts have already been made to utilize their temperature-dependent hydrophobicity for adsorption and separation. For example, Japanese Patent Laid-open No. 121,804/1980 contains one Example in which the adsorption of polyethyleneglycol nonylphenyl ether having a polymerization degree of 10 was conducted using an adsorbent composed of alumina and polyvinyl methyl ether carried thereon. It has recently been discovered that the above-described phenomenon may also take place with an aqueous solution of a polymer of N-isopropylacrylamide. For example, it is disclosed (on page 117—126 of the Abstracts of Research Papers Read at the 1983 Meeting of Research Institute for Polymers and Textiles, Agency of Industrial Science and Technology, Japanese Government) that making use of the above-described property of the aqueous solution of the N-isopropylacrylamide polymer, the adsorption of polyethyleneglycol nonylphenyl ether having a polymerization degree of 10 was carried out using an adsorbent composed of cotton fabric and N-isopropylacrylamide graft-polymerized thereon. In each of the above disclosures, properties of the base material, i.e., the N-isopropylacrylamide polymer as an adsorbent do not appear to have been fully clarified, because the polyethyleneglycol nonylphenyl ether used as the solute contains by itself nonylphenyl groups, which are hydrophobic groups, and polyethyleneglycol groups which become hydrophobic upon heating. According to a study conducted by the present inventors, they do not seem to be satisfactory as adsorbents as demonstrated by Comparative Examples which will be given herein.

With a primary objective placed on the separation of proteins, water-soluble high-molecular compounds, and like substances, another development has been made on a separation method in which the hydrophobicity of hydrophobic groups such as phenyl groups or alkyl groups are utilized by introducing such hydrophobic groups into polysaccharides such as agarose.

Although the above separation method does not develop non-specific irreversible adsorption as mentioned above upon elution of the previously-adsorbed protein, contamination of the eluate with an electrolyte, acid, base or the like is unavoidable. In addition, such a polysaccharide gel generally has low mechanical strength. When a solution is passed through the polysaccharide gel, in order to conduct the adsorption and removal of contaminants, impurities or the like from the solution, the polysaccharide gel tends to develop problems such as pressure loss, clogging and the like. Therefore, it is not a fully satisfactory adsorbent.

EP—A—0 079 842 discloses the preparation of acrylic co-polymers by bulk polymerization, suspension polymerization or by heating, wherein a N,N-disubstituted (meth)acrylamide is copolymerized with a N-acryloylaminoacid or -ester and a N,N'-bis acryloyldiaminoalcane as a cross-linking agent. The

copolymerized product as described is useful as a cation exchange resin in a substantially conventional chromatographic ion exchange purification process, for example applicable to the separation of proteins.

An object of this invention is to provide a separation process capable of minimizing contamination by eluents such as acids, bases or electrolytes, by making use of an adsorbent which has an adsorption and desorption function such that the adsorption and desorption take place at higher temperatures and lower temperatures respectively.

According to the present invention, there is provided an adsorption-desorption method for the separation of water soluble organic compounds from an aqueous solution containing the same wherein the water soluble organic compounds are selected from (a) compounds containing active hydrogen atoms, which are substituted by one or more hydroxyl, carboxyl, sulfonic acid, phosphoric acid or mercapto groups; and (b) compounds containing a hydrophobic group, which contain, as their hydrophobic groups, cyclic structures such as aromatic rings and long-chain hydrocarbon radicals from an aqueous solution, wherein the method comprises the steps of:

(a) providing a water insolubilized polymeric adsorbent material selected from:

(1) a homopolymer of at least one monomer selected from N-alkyl- or N-alkylene-substituted (meth)acrylamides represented by the following general formula (I) or (II):

$$CH_2=C(R_1)-CO-N(R_2)(R_2) \qquad (I)$$

wherein

$R_1$ is a hydrogen atom or methyl group and

$R_2$ is a methyl or ethyl group, or

$$CH_2=C(R_1)-CO-N\overbrace{\quad}^{}A \qquad (II)$$

wherein $R_1$ is a hydrogen atom or methyl group and A is a member selected from the group consisting of $-(CH_2)_n-$ or $-(CH_2)_2-O-(CH_2)_2-$ wherein n is an integer of from 4 to 6;

(2) a first copolymer of two or more monomers selected from said (meth)acrylamides, and

(3) a second copolymer of at least one monomer selected from said (meth)acrylamides and one or more monomers other than said (meth)acrylamides and copolymerizable therewith;

(b) bringing said aqueous solution containing said water soluble organic compounds into contact with said polymeric adsorbent material at an adsorbing temperature in the range of 10 to 100°C for a time sufficient to allow said water soluble organic compounds to be adsorbed from said aqueous solution onto said polymeric adsorbent material;

(c) separating said aqueous solution from said polymeric adsorbent material containing said adsorbed water soluble organic compounds; and

(d) desorbing said water soluble organic compounds from said polymeric adsorbent material by contacting said polymeric adsorbent material with a desorbing aqueous solution at a desorbing temperature in the range of −10 to +50°C and which is at least 5°C lower than the adsorbing temperature.

The process of the present invention may be used for the adsorption and separation of various physiologically-active substances and various organic compounds from solutions containing the same, inter alia for the decolorization and purification of solutions containing various compounds, and for the adsorption treatment of various waste liquids.

The invention is now explained in more detail in the following description of preferred embodiments, which description is given by way of example of the invention.

The term "N,N-disubstituted (meth)acrylamides" as used herein means N,N-disubstituted acrylamides and N,N-disubstituted methacrylamides, and the terms "homopolymer and copolymer of these N,N-disubstituted (meth)acrylamides" mean polymers including (as the case may be) at least one monomer which is represented either by the following general formula:

$$CH_2=C(R_1)-CO-N\overbrace{\quad}^{}A \qquad (I)$$

wherein $R_1$ means a hydrogen atom or methyl group, and A denotes $-(CH_2)_n-$, n being 4 to 6, or $-(CH_2)_2-O-(CH_2)_2-$, or by the general formula (II):

$$CH_2=\overset{R_1}{\overset{|}{C}}-CO-N\begin{matrix} R_2 \\ R_2 \end{matrix} \quad (II)$$

wherein $R_1$ means a hydrogen atom or methyl group and $R_2$ denotes a methyl or ethyl group. The adsorbent is obtained by water-insolubilizing (i) a homopolymer of one of these N,N-disubstituted (meth)acrylamides, (ii) a copolymer of two or more of the N,N-disubstituted (meth)acrylamides or (iii) a copolymer of one or more of the N,N-disubstituted (meth)acrylamides and one or more other copolymerizable monomers. The adsorbent for the purposes of the present invention is rendered hydrophobic to increase its adsorbability when heated but it decreases its adsorbability upon cooling.

As exemplary monomers represented by the general formula (I) or (II), may be mentioned N-acryloylpyrrolidine; N-methacryloylpyrrolidine; N-acryloylpiperidine; N-methacryloylpiperidine; N-acryloylhexahydroazepine; N-methacryloylhexahydroazepine; N-acryloylmorpholine; N-methacryloylmorpholine; N,N-dimethylacrylamide; N,N-dimethylmethacrylamide; N,N-diethylacrylamide; and N,N-diethylmethacrylamide.

Illustrative of monomers copolymerizable with the above-described monomers are hydrophilic monomers, ionic monomers and hydrophobic monomers. One or more of such monomers may be used.

More specifically as hydrophilic monomers, (meth)acrylamide and their lower alkyl-substituted, hydroxyl-substituted and polyalkyleneglycol-substituted derivatives may be mentioned. In addition, it may also be possible to use monomers imparted with hydrophilicity by hydrolysis of polymers.

Representative examples of such hydrophilic monomers are: acrylamide; methacrylamide; N-methylacrylamide; N-ethylacrylamide; N-n-propylacrylamide; N-n-propylmethacrylamide; N-isopropylacrylamide; N-isopropylmethacrylamide; diacetoneacrylamide; hydroxyethyl methacrylate; hydroxyethyl acrylate; hydroxypropyl methacrylate; hydroxypropyl acrylate; various methoxypolyethyleneglycol methacrylates; various methoxypolyethyleneglycol acrylates; N-vinyl-2-pyrrolidone; vinylphenol; isopropenylphenol; and the like.

Furthermore, hydrophilicity may also be imparted by introducing vinyl acetate, glycidyl methacrylate or the like through copolymerization and then subjecting the resultant copolymers to hydrolysis.

As ionic monomers, may be mentioned carboxyl-substituted monomers, sulfo-substituted monomers, dialkylamino-substituted monomers and so on. Additionally may be mentioned those monomers imparted with ionic properties by the hydrolysis of polymers. Typical ionic monomers are for example: acids such as acrylic acid, methacrylic acid, vinylsulfonic acid, allylsulfonic acid, methallylsulfonic acid, styrenesulfonic acid, 2-acrylamido-2-phenylpropanesulfonic acid, and 2-acrylamido-2-methylpropanesulfonic acid, and their salts; as well as amines such as N,N-dimethylaminoethyl methacrylate, N,N-diethylaminoethyl methacrylate, N,N-dimethylaminoethyl acrylate, N,N-dimethylaminopropylmethacrylamide and N,N-dimethylaminopropylacrylamide, and their salts.

Ionic properties may also be imparted by introducing various acrylates, methacrylates, acrylamides, methacrylamides, acrylonitriles and the like through copolymerization and then subjecting the resultant copolymers to hydrolysis.

Hydrophobic monomers can include alkyl-substituted, glycidyl-substituted and glycidoxyalkyl-substituted derivatives of (meth)acrylamide, (meth)acrylate derivatives, nitrile-substituted monomers, esterified monomers, and aromatic ring-substituted monomers, etc. Representative examples are: N-alkyl(meth)acrylamide derivatives such as N-ethylmethacrylamide, N,N-di-n-propylacrylamide, N-n-butylacrylamide, N-n-butylmethacrylamide, N-tert-butylacrylamide, N-tert-butylmethacrylamide, N-n-hexylacrylamide, N-n-hexylmethacrylamide, N-n-octylacrylamide, N-n-octylmethacrylamide, N-tert-octylacrylamide, N-n-dodecylacrylamide, N-n-dodecylmethacrylamide and the like; N-(ω-glycidoxyalkyl)(meth)acrylamide derivatives such as N,N-diglycidylacrylamide, N,N-diglycidylmethacrylamide, N-(5-glycidoxypentyl)acrylamide, N-(6-glycidoxyhexyl)acrylamide, etc.; (meth)acrylate derivatives such as ethyl acrylate, methyl methacrylate, butyl methacrylate, lauryl acrylate, 2-ethylhexyl methacrylate, glycidyl methacrylate and so one; acrylonitrile; vinyl acetate; vinyl chloride; styrene; α-methylstyrene; butadiene; isoprene; and the like.

For water-insolubilizing the polymers of the above-defined monomers, they may be insolubilized upon polymerization or by treating them subsequent to their polymerization. Specific insolubilization methods, may involve (1) copolymerizing the above (meth)acrylamide derivatives with a crosslinkable monomer containing two or more double bonds per molecule, wherein the term "the (meth)acrylamide derivatives" here and hereafter in this description means the N,N-disubstituted (meth)acrylamides as described in the formula (I) or (II) or a combination thereof with the above-described copolymerizable monomers (2) copolymerizing the (meth)acrylamide derivatives with N-alkoxymethyl(meth)acrylamide derivatives; (3) copolymerizing the (meth)acrylamide derivatives with a hydrophobic monomer in large proportions relative to the (meth)acrylamide derivatives; (4) polymerizing without a solvent the (meth)acrylamide

derivatives; (5) subjecting the polymers to heat treatments; (6) integrating the polymers with a water-insoluble fibrous material such as cellulose or the like; (7) when hydroxyl groups, amino groups or the like are contained in the polymers, to react such groups with a polyfunctional compound such as epichlorohydrin so as to crosslink and insolubilize the polymers; (8) as well as copolymerizing the polymers with a monomer containing a substituent group, which contains active hydrogen such as carboxyl group, sulfonic acid (or sulfo) group, hydroxyl group or the like, substituted thereto or to cause the polymers to form composite materials with a polymer containing such substituent groups substituted thereto.

More specifically, the first method can employ, as the crosslinkable monomers, inter alia N,N'-methylenebisacrylamide, N,N-diallylacrylamide, triacrylformal, N,N-diacryloylimide, N,N-dimethacryloylimide, ethyleneglycol acrylate, ethyleneglycol dimethacrylate, various polyethylene glycol diacrylate, various polyethyleneglycol dimethacrylates, propyleneglycol diacrylate, propyleneglycol dimethacrylate, various polypropyleneglycol diacrylates, various polypropyleneglycol dimethacrylates, 1,3-butyleneglycol diacrylate, 1,3-butyleneglycol dimethacrylate, 1,4-butyleneglycol dimethacrylate, glycerol dimethacrylate, neopentylglycol dimethacrylate, trimethylolpropane triacrylate, trimethylolpropane trimethacrylate, trimethylolethane trimethacrylate, trimethylolethane triacrylate, tetramethyloylmethane tetramethacrylate, tetramethylolmethane triacrylate, divinyl benzene and diallyl phthalate. The N-alkoxymethyl(meth)acrylamide derivatives used in the second method can include an N-hydroxymethyl(meth)-acrylamide derivative; examples of said derivatives include N-methylol(meth)acrylamide, N-methoxymethyl(meth)acrylamide, N-ethoxymethyl(meth)acrylamide, N-n-butoxymethyl(meth)acrylamide and N-tert-butoxymethyl(meth)acrylamide. In the third method, the proportion of the hydrophobic monomer to the (meth)acrylamide derivative having amphiphilic properties may vary depending on the choice of (meth)acrylamide derivative and hydrophobic monomer and cannot thus be sweepingly determined to any specific proportion. However, its proportion may generally be at least 1% or preferably 3% or more. As a technique for effecting the bulk polymerization in the fourth method, it may be feasible to employ such a technique as polymerizing a monomer without diluting it with a solvent so as to obtain a polymer block or effecting polymerization in droplets of the monomer while suspending the monomer in a solvent so that the resultant polymer is obtained in a granular or particulate form. In the fifth method in which each polymer is subjected to a heat treatment, the heating conditions vary depending on the polymer. However, a polymer obtained by bulk polymerization, suspension polymerization, solution polymerization or the like may generally be subjected to a heat treatment at 60—250°C or preferably 80—200°C. In the case of a polymer obtained by solution polymerization, the heat treatment may be conducted concurrently with the drying of the polymer or the removal of solvent from the polymer. In the sixth method, in which the polymer is integrated with a fibrous material or other substrate, it may be possible to impregnate a water-insoluble fibrous material such as fibers of cellulose, nylon, polyester or acrylic polymer, non-woven fabric made of polypropylene, ethylene-propylene copolymer or the like or a water-insoluble porous inorganic material such as silica, alumina or zeolite with the above-described (meth)acrylamide derivative, followed by polymerization of the (meth)acrylamide derivative there, graft-polymerizing the (meth)acrylamide derivative to such fibers, non-woven fabric or porous inorganic materials, or impregnating such fibers or non-woven fabric or porous inorganic materials with a homopolymer or copolymer of the (meth)acrylamide derivative. In the seventh method, in which a polyfunctional compound such as epichlorohydrin is reacted to crosslink and insolubilize the homopolymer or copolymer, it is necessary to introduce hydroxyl or amino groups in the homopolymer or copolymer in advance. Amino groups can be readily introduced by copolymerization. In the case of hydroxyl groups, they may be introduced by copolymerizing the (meth)acrylamide derivative with hydroxyethyl methacrylate, isopropenylphenol or the like or by copolymerizing the (meth)acrylamide derivative with vinyl acetate, glycidyl methacrylate or the like and then saponifying the resultant copolymer with a basic substance. Thereafter, the resultant polymer is reacted with the polyfunctional compound such as epichlorohydrin in the presence of a basic substance to crosslink and insolubilize the polymer. Upon conducting the reaction, the polymer is turned like agar-agar when it is insolubilized as is, namely, in the aqueous form. By crushing the thus-insolubilized product, it becomes ready for actual applications. On the other hand, the polymer can be obtained in the form of a granular or particulate gel when its aqueous solution is dispersed in an oil and is then insolubilized.

In the eighth method of insolubilization, where, the formation of the composite material is effected by copolymerizing the (meth)acrylamide derivative with the above-described monomer containing active hydrogen, mixing the polymer of the derivative with a polymer of the monomer, or substituting active hydrogen atoms in a polymer of such a monomer with ammonium ions or the like, and then adding an acid to the resultant mixture to restore active hydrogen for the formation of the composite material.

The eight above-described methods may be employed either singly or in combination. Better results may generally be obtained when two or more of the above methods are used in combination.

As more specific polymerization methods useful for preparing the adsorbent used in this invention according to the above-described methods, it is possible to employ such a method as (1) polymerizing the monomer as is without diluting same with any solvent so as to prepare a polymer block, (2) polymerizing the monomer in a solvent, and drying the resultant polymer after its polymerization or causing the polymer to deposit in a poor solvent so as to obtain the polymer, (3) obtaining as a granular or particulate polymer by suspension polymerization, (4) obtaining as a polymer latex by emulsion polymerization, or (5)

impregnating or graft-polymerizing a solution of the polymer to an water-insoluble fibrous material or porous inorganic material so as to integrate the polymer with the fibrous or inorganic material. As a method for initiating the polymerization, better results may generally be obtained from the use of a polymerization initiator although the polymerization may still be initiated by simply heating the monomer. No limitation is imposed on the polymerization initiator so long as it can initiate radical polymerization. Illustrative of the polymerization initiator may be inorganic peroxides, organic peroxides, combinations of such peroxides and reducing agents, and azo compounds. Specific per-compounds include potassium persulfate, hydrogen peroxide, tert-butyl peroxide, benzoyl peroxide, tert-butyl peroxy-2-ethyl hexanoate and butyl perbenzoate. Reducing agents which may be combined with such polymerization initiators include sulfites, hydrogensulfites, low-valence metal salts such as iron, copper and cobalt salts, organic amines such as aniline, and reducing sugars such as aldose and ketose. It may be feasible to use, as azo compounds, azobisisobutyronitrile, 2,2'-azobis-2-amidinopropane hydrochloride, 2,2'-azobis-2,4-dimethylvaleronitrile, 4,4'-azobis-4-cyanovaleic acid and so on. Two or more of the above-described polymerization initiators may be used in combination. It is sufficient if such a polymerization initiator is added within an amount range usually employed, for example, within the range of 0.01 to 5 wt.% or preferably 0.05 to 2 wt.% based on the weight of the monomer or monomers.

Of polymers obtained in the above manner, those obtained in block forms or available after removal of solvents by distillation may be crushed into powder or molten and formed into granules or beads, flakes, fibers or films. Particulate or granular polymers may be utilised as they are. Latex-like polymers may be impregnated or coated onto fibrous materials such as fabric or paper or may be formed into films. They can then be utilised as adsorbents.

Adsorbents may be prepared in various forms by the methods described above. Their most suitable forms are determined depending on how they will be used.

The separation and purification of valuable materials or substances, and the removal of impurities from valuable materials or substances, are possible by use of the adsorbents in the process of this invention. Such separation, purification and removal are generally carried out by column chromatography. Adsorbents packed in such columns are conveniently of powdery or granular forms, including from those employed for analytical liquid chromatography to those used for chromatography as industrial separation means. Powdery products may be obtained by various methods, for example, by conducting gel polymerization in an aqueous solution and then drying and crushing the resultant gel as described above. On the other hand, granular products may generally be produced with ease by suspension polymerization. Since N,N-disubstituted acrylamides or methacrylamides which are used in the present invention are generally highly-soluble in water, suspension polymerization may be effected using the reversed-phase suspension polymerization technique in which a monomer, its aqueous solution or the like is dispersed in an oil. The salting-out suspension polymerization technique can be used instead: the polymerization is conducted under such conditions that a large amount of an electrolyte or the like is dissolved in an aqueous solution to suppress the solubility of a monomer. Further, the deposition and suspension polymerization technique can be used, in which polymerization is effected at a high temperature above the cloud point of the resulting polymer so as to deposit the resulting polymer.

It is also possible to use adsorbents obtained by integrating such polymers with inorganic porous particles, granules or beads such as silica, alumina or zeolite, for example by impregnating or graft-polymerizing solutions of the polymers onto the surfaces of such inorganic porous particles, granules or beads. Porous polymers may also be prepared if a third component miscible with the monomers but immiscible with the resulting polymers is added upon polymerization of the monomers.

A wide variety of compounds may be adsorbed and separated by the above-described adsorbents. Among such compounds, preferred ones may be classified into two groups, namely, (1) compounds containing active hydrogen and (2) compounds containing hydrophobic groups. The adsorbents of this invention may be applied to such compounds whether they are low molecular compounds or high molecular compounds.

Compounds containing active hydrogen are those substituted by one or more hydroxyl, carboxyl, sulfonic acid, phosphoric acid or mercapto groups. Among such compounds, preferred ones are compounds substituted especially by substituent groups containing active hydrogen bonded to an oxygen atom, for example, hydroxyl, carboxyl, sulfonic acid or phosphoric acid groups. Hydroxyl-substituted compounds may be divided roughly into low molecular compounds and high molecular compounds. Low molecular compounds may be classified into phenols and alcohols. Phenols are compounds each of which contains one or more hydroxyl groups substituted to the aromatic ring, including for example phenol, cresol, xylenol, hydroquinone, benzenetriol, salicyl alcohol, naphthol, anthrol, nonylphenol, carvacrol, vinylphenol, isopropenylphenol, diphenylphenol, biphenyldiol, naphthylphenol, phenylnaphthol, p-cumylphenol, 4,4'-dihydroxydiphenyl-2,2-propane, and 4,4'-dihydroxydiphenylsulfon. Also included are those containing halogen atom or atoms and/or nitro, amino, thiol and/or alkoxy groups substituted to aromatic rings in addition to alkyl or alkenyl groups. As alcohols, there are those individually containing one or more hydroxyl groups substituted to an aliphatic or alicyclic hydrocarbon group or to the side chain of an aromatic hydrocarbon group, polyalkylene glycols containing at least one of the two hydroxyl groups remaining as is, and those containing hydroxyl groups substituted to heterocyclic groups. As compounds each containing one or more hydroxyl groups substituted to a saturated aliphatic or alicyclic hydrocarbon

group, may for example be mentioned methanol, ethanol, butanol, hexanol, octanol, decanol, lauryl alcohol, stearyl alcohol, ethylene glycol, propylene glycol, butanediol, glycerol, pentaerythritol, pinacol, cyclohexanol, cyclohexanediol, 4,4'-diphenyldicyclohexyl-2,2-propane, menthol, benzyl alcohol, and phenethyl alcohol. As compounds each formed by substituting one or more hydroxyl groups to the side chain hydrocarbon radical there are e.g. hydroxyethyl acrylate, hydroxyethyl methacrylate, and N-methylolacrylamide. As exemplary compounds containing one or more hydroxyl groups substituted to a saturated aliphatic or alicyclic hydrocarbon radical may be mentioned allyl alcohol, methallyl alcohol, propargyl alcohol, butenediol, butenol, cyclohexenyl alcohol, and cyclohexenediol. Then, as polyalkylene glycols containing at least one of the two hydroxyl groups remaining as is, may for example be included polyalkylene glycols such as diethylene glycol, dipropylene glycol, triethylene glycol, and tripropylene glycol, those obtained by substituting one of the hydroxyl groups of the above polyalkylene glycols with an alkoxyl group, and those substituted by phenoxy groups such as polyethyleneglycol nonylphenyl ether. Compounds containing hydroxyl groups substituted to heterocyclic rings include, for example quinolinol, isodolol, hydroxythiophene, and hydroxypiperidine. High molecular compounds are homopolymers and copolymers of hydroxyl-substituted monomers such as hydroxyethyl methacrylate, hydroxyethyl acrylate, N-methylolacrylamide, vinylphenol, and isopropenyl phenol as well as copolymers between such hydroxyl-substituted monomers and other copolymerizable monomers, and also include those obtained by hydrolyzing homopolymers or copolymers of vinyl acetate, glycidyl methacrylate and the like so as to introduce hydroxyl groups thereto. As the above-described copolymerizable monomers, the above-described hydrophobic monomers, hydrophilic monomers and ionic monomers are mentioned and in addition, (meth)acrylamide and N-substituted derivatives thereof may also be employed.

Carboxyl-substituted compounds may be roughly divided into low molecular compounds and high molecular compounds. The low molecular compounds include those substituted to aliphatic hydrocarbon radicals, those substituted to alicyclic or aromatic hydrocarbon radicals and those substituted to heterocyclic groups. As those obtained by substituting one or more carboxyl groups to an aliphatic hydrocarbon radical, may for example be mentioned formic acid, acetic acid, propionic acid, butyric acid, valeric acid, pivalic acid, lauric acid, myristic acid, palmitic acid, stearic acid, oxalic acid, malonic acid, succinic acid, gultaric acid, adipic acid, pimelic acid, suberic acid, azelaic acid, sebacic acid, butane-tricarboxylic acid, hexanetricarboxylic acid, acrylic acid, propiolic acid, methacrylic acid, crotonic acid, oleic acid, maleic acid, fumaric acid, and citraconic acid. Illustrative of those obtained by substituting one or more carboxyl groups to an alicyclic or aromatic hydrocarbon radical are cyclohexanecarboxylic acid, camphoric acid, benzoic acid, phthalic acid, isophthalic acid, terephthalic acid, naphthoic acid, toluic acid, biphenylcarboxylic acid, benzenetricarboxylic acid, pyromellitic acid, naphthalenetricarboxylic acid, phenylacetic acid, phenylpropionic acid, cinnamic acid, naphthalenetriacetic acid, and naphthalene-hexanoic acid. Also included are those obtained by substituting halogen atoms, nitro groups, amino groups, thiol groups, alkoxy groups and the like to aromatic rings. Compounds obtained by substituting one or more carboxyl groups to a heterocyclic ring, may for example be mentioned furoic acid, thenolic acid, nicotinic acid, isonicotinic acid, and pyrrolecarboxylic acid. Also included are amino acids obtained by substituting amino groups to the above compounds. Examples of such amino acids include alanine, β-alanine, phenylalanine, arginine, cystine, glycine, histidine, serine, isoleucine, lysine, methionine, cysteine, tryptophan, asparatic acid, glutamic acid, norvaline, norleucine, ornithine, proline, sarcosine, threonine, thyronine, tyrosine and valine.

Exemplary high molecular compounds may include homopolymers and copolymers of unsaturated carboxylic acids such as acrylic acid, propiolic acid, methacrylic acid, maleic acid and fumaric acid as well as copolymers between such unsaturated carboxylic acids and other copolymerizable monomers. Also included are compounds obtained by hydrolyzing homopolymers or copolymers of various acrylates, methacrylates, acrylamides, methacrylamides, acrylonitriles and maleic anhydrides for instance, so as to put back carboxylic groups thereto. As the above-mentioned other copolymerizable monomers, may be mentioned the above-described hydrophobic monomers and ionic monomers. Further, (meth)acrylamide and its N-substituted derivatives may also be used.

In addition, compounds obtained by introducing both hydroxyl and carboxyl groups to each molecule are also included. As such compounds, may for example be mentioned glycolic acid, lactic acid, β-hydroxypropionic acid, glyceric acid, tartronic acid, malic acid, tartaric acid, tropic acid, benzilic acid, salicylic acid, vanillic acid, protocatechuic acid and gallic acid.

Compounds substituted by sulfonic acid groups may first of all be divided into low molecular compounds and high molecular compounds in the same manner as described above. As low molecular compounds, may be mentioned methanesulfonic acid, ethanesulfonic acid, allylsulfonic acid, methallylsulfonic acid, 2-acrylamido-2-methylpropanesulfonic acid, 2-acrylamido-2-phenylpropanesulfonic acid, benzenesulfonic acid, p-toluenesulfonic acid, styrenesulfonic acid, naphthalenesulfonic acid, alkylnaphthalenesulfonic acid, and 2-hydroxy-2-phenylpropanesulfonic acid. Exemplary high molecular compounds include homopolymers and copolymers of unsaturated sulfonic acids such as allylsulfonic acid, 2-acrylamido-2-methylpropanesulfonic acid, methallylsulfonic acid, 2-allylamido-2-phenylpropane-sulfonic acid and styrenesulfonic acid as well as copolymers between such unsaturated sulfonic acids and other copolymerizable monomers. Naphthalenesulfonic acid-formaldehyde condensation products and the like may also be used. The other copolymerizable monomers, may comprise the above-described

hydrophobic monomers, hydrophilic monomers and ionic monomers. In addition, (meth)acrylamide and its N-substituted derivatives may also be used. Furthermore, compounds containing both hydroxyl and sulfonic groups substituted per molecule are also included.

Among compounds substituted by phosphoric groups, low molecular compounds include various mono- and disubstituted phosphoric acid esters. Such esters, may for example by phenylphosphoric acid, diphenylphosphoric acid, phytic acid, 2-methacryloxyethylphosphoric acid, 2-acryloxyethylphosphoric acid, and 2-acrylamido-2-methylpropylphosphoric acid.

High molecular phosphoric-substituted compounds can comprise homopolymers and copolymers of unsaturated phosphoric acid esters such as 2-methacryloxyethyl phosphate, 2-acryloxyethyl phosphate and 2-acrylamido-2-methylpropyl phosphate as well as copolymers between such unsaturated phosphoric acid esters and other copolymerizable monomers. Also included are various phosphoric acid esters playing important roles in the biochemical field. More specifically, may be mentioned orthophosphoric acid esters of saccharides such as hexose phosphate, various nucleotides formed of saccharides bonded to bases and phosphoric acid bonded to the saccharides to form esters, and polyphosphoric acid esters such as ADP and ATP.

Compounds containing hydrophobic groups include those containing, as their hydrophobic groups, cyclic structures such as aromatic rings and long-chain hydrocarbon radicals. More specific classes of such compounds are e.g. surfactants, proteins, physiologically-active substances such as antibiotics, amino acids, aromatic compounds, colorants and perfumes. They are generally hydrophobic by themselves but still have solubility in water.

Surfactants here include all anionic, non-ionic, cationic and amphoteric surfactants. Examples of anionic surfactants are fatty acid soaps, N-acylamino acids and their salts, salts of alkylethercarboxylic acids, acylated peptides, salts of alkylbenzenesulfonic acids, salts of alkylnaphthalenesulfonic acids, salts of dialkylsulfosuccinic acid esters, salts of α-olefinsulfonic acids, N-acylmethyltaurine, sulfonated oils, higher alcohol sulfates, alkyl ether sulfates, polyoxyethylenealkyl phenyl ether sulfates, and phosphoric acid esters. Illustrative examples of non-ionic surfactants are alkyl and alkylaryl polyoxyethylene ether, alkylarylformaldehyde condensed polyoxyethylene ether, block polymers containing polyoxypropylene groups as hydrophobic groups, polyoxyethylene ethers of glycerin esters, polyoxyethylene ethers of sorbitan esters, polyoxyethylene ethers of sorbitol esters, polyethylene glycol fatty acid esters, glycerin esters, sorbitan esters, propylene glycol esters, sucrose esters, fatty acid alkanol amides, polyoxyethylene fatty acid amides, polyoxyethylene alkylamines, and alkylamine oxides. Cationic surfactants, may be exemplified by aliphatic amine salts, their quaternary ammonium salts, and heterocyclic quaternary ammonium salts. Amphoteric surfactants may for example include carboxybetaine type surfactants, aminocarboxylic acid type surfactants and imidazolinium betaine.

As to proteins, those soluble in water are preferred. A very wide range of proteins may be employed. Since proteins are polypeptides having molecular weights in the range of from 1,000 to 1,000,000, their types are extremely diversified and cannot all be exemplified. Representative examples only are given below: sucrose, glucagon, cytochrome C, myoglobin, chymotrypsinogen, egg white albumin, ovomucoid, malic acid dehydrogenase, bovine serum albumin, transferrin, E. coli phosphatase, lactoperoxidase, fetuin, glyceraldehyde-3-phosphoric acid dehydrogenase, lactic acid dehydrogenase, serum albumin, aldolase, yeast alcohol dehydrogenase, ceruloplasmin, fumarase, catalase, γ-globulin, R-phycoerythrin, α-conarakin, fibrinogen, apoferritin, urease, β-galactosidease, ferritin and α-crytallin.

As to exemplary physiologically-active substances such as antibiotics, may be mentioned antibiotics followed by hypnosedatives, antiepileptics, antipyretic, analgesic and antiphlogistic drugs, mental and nervous drugs, obtundents, muscle relaxants, autonomic drugs, sense organ drugs, antihistamines, cardiotonics, antiarrhythmics, hypotensor and diuretic drugs, vasodilators, therapeutic drugs for arteriosclerosis, anhelation drugs, antibechic and expectorant drugs, digestive organ drugs, adrenal hormone preparations, sex hormone preparations, and other hormone preparations, bacteriocidal and disinfectant agents, vitamin preparations, nourishing, antasthenic and alterative agents, anticoagulants, stiptics, liver drugs, therapeutic drugs for intoxication, enzyme preparations, antidiabetics, antimalignant tumor drugs, chemotherapeutic drugs, biological preparations, anthelmintics, antiprotozoals, and narcotics. Each of them includes a number of compounds of different types. Even taking antibiotics by way of example, they may be classified into penicillin-type antibiotics, cephalosporin C-type antibiotics, macroride-type antibiotics, chloramphenicol-type antibiotics, tetracycline-type antibiotics, etc.

As to amino acids, those described above may be applied. Amino acids substituted by hydrophobic groups such as aromatic rings can provide high molecular composite materials having stronger intermolecular forces.

As aromatic compounds, may be cited cyclic hydrocarbon compounds such as benzene, naphthalene, anthracene, and phenanthrene or compounds containing fused rings obtained by condensing heterocyclic rings on hydrocarbon rings such as indole, carbazole, benzofuran, anthraquinone, and benzothiophene. Also included are those compounds obtained by substituting one or more alkyl groups, halogen atoms, nitro groups, amino groups or the like to the above aromatic or heterocyclic rings, those obtained by substituting one or more hydroxyl groups, carboxyl groups, sulfonic acid groups, or the like to the above aromatic or heterocyclic rings but further ionizing by replacing the active hydrogen of their substituent

groups with metal ions such as alkali metal ions, and those formed by converting their hydroxyl groups into oxygen such as benzoquinone.

Colorants, can include those obtained by introducing chromogenic groups into the above-described aromatic compounds. They may be roughly classified into dyes, organic pigments, coloring agents, various titration indicators and so on. Exemplary dyes include cationic dyes, basic dyes, acid dyes, disperse dyes, substantive dyes, sulfur dyes, vat dyes, azoic dyes, fluorescent brightening dyes, and composite dyes. Organic pigments may include soluble azo pigments, insoluble azo pigments (naphthol type), insoluble azo pigments (anilide type), phthalocyanin type pigments, color lakes, mordant type pigments (alizarin type), and vat pigments. Coloring agents may include synthetic tar colors and their aluminum lakes as well as natural colors, all of which are principally employed as food colors, for example red food colors, yellow food colors, green food colors, blue food colors, β-carotene, iron chlorophyllin sodium, and copper chlorophyll. Amongst titration indicators may be mentioned neutralization indicators such as Methyl Red and phenolphthalein, chelate titration indicators such as ureo chromium black and cresolphthalein complexon, redox titration indicators such as Methylene Blue and diphenylamine-4-sulfonic acid, and adsorption indicators such as fluorescein and dichlorofluorescein.

Perfumes contain aromatic rings or long-chain alkyl groups as their skeletal structures, to each of which may be substituted one or more of acyl, alkoxy, formyl, alkyl, alkenyl, alkoxyacyl, amino, hydroxyl, lactam, hydroxyalkyl, hydroxyalkenyl, formylalkyl, formylalkenyl, carboxyalkyl, carboxyalkenyl, alkoxycarbonylalkyl, alkoxycarbonylalkenyl and alkoxycarbonyl groups.

Among specific methods for adsorbing and separating the above-described compounds by application of this invention, it is possible to employ (a) the batch method in which the adsorbent is added to aqueous solutions of the above compounds to adsorb the compounds on the adsorbent, (b) the fixed bed method in which the adsorbent is packed in columns or the like and the aqueous solutions are caused to flow therethrough, and (c) the fluidized bed method in which the adsorbent is caused to flow through the aqueous solutions. Since the mechanical strength of the adsorbent is high, it is possible to cause the aqueous solutions to flow at high flow velocities in each of the above methods. When adsorbing the above compounds on the adsorbent, it is better to conduct the adsorption at relatively high temperatures. It is however essential to control the adsorption temperatures at levels at which the adsorbate compounds do not undergo quality alteration or lower. The adsorbability does not always increase as the temperature rises. In some instances, there are optimum temperatures. Therefore, the adsorption temperature cannot be defined sweepingly. It may generally be within the range of 10—100°C. It is however convenient to effect actual adsorption after the optimum temperature has been ascertained by effecting an adsorption test in advance. Turning next to the pH of each aqueous solution upon conducting its adsorption, the adsorbent of this invention can be used in both acid and alkaline ranges so long as the adsorption is effected under usual conditions because the adsorbent of this invention contains an N,N-di-substituted (meth)acrylamide polymer as its base material. In the case of compounds substituted by substituent groups having an active hydrogen such as one or more carboxyl groups, sulfonic acid groups, hydroxyl groups, phosphoric groups and/or the like, the adsorbability may generally be increased if their adsorption is effected in a neutral to acidic range. In the case of amphoteric substances such as amino acids, the adsorbability may be increased if their adsorption is effected at pH levels below their isoelectric points. The amount of each adsorbate adsorbed in the above manner may vary depending for instance on the polymer type, the structure of the adsorbent such as the existence or non-existence of macropores, the type of the adsorbate compound, and the adsorption method, etc. However, it is approximately 1—1,000 mg/g-adsorbent. The adsorbability may be increased by forming macropores in the adsorbent.

If an adsorbate compound cannot be dissolved in water or the like, it is possible to use a solvent such as methanol, ethanol, isopropanol, acetone, dioxane, dichloroethane, benzene, toluene, hexane or the like alone or mixed with water.

Turning next to the desorption temperature, the adsorbate can be desorbed more efficiently and the adsorbent can thus be recovered with better efficiency as the temperature falls. The desorption temperature is within the range of −10—+50°C. Alternatively, it is possible to effect desorption in an alkaline state in the case of the above-described compounds substituted by substituent groups containing active hydrogen or at pHs of isoelectric points or higher in the case of amphoteric substances or in combination of above-described methods. After desorption, a new adsorbate solution may be caused to pass through columns to undergo adsorption again. Otherwise, after desorption, the adsorbent regeneration can be carried out by passing chilled water or an alkaline solution through columns to wash thoroughly the adsorbent.

The most suitable polymer composition varies depending on the compound to be adsorbed and separated. It is thus preferred to carry out an adsorption test in advance for each adsorbate compound so that a suitable polymer composition can be selected. However, it is practically impossible to conduct such a test on every combination. As general tendency, relatively good results may in many instances be obtained if an adsorbent having relatively low hydrophobicity is used upon adsorbing and separating highly-hydrophobic compounds and if an adsorbent having relatively high hydrophobicity is employed upon adsorbing and separating compounds having low hydrophobicity.

As a method for judging the hydrophobicity of adsorbents used by this invention, it is possible to utilize the property of the adsorbent that it is rendered hydrophobic when heated. Namely, when polymer

components of this invention are formed into aqueous solution without their insolubilization, many of them are rendered hydrophobic and exhibit cloud points when heated. Based on the cloud points, it is possible to judge the hydrophobicity of the polymers. Generally speaking, the hydrophobicity becomes more marked as the cloud point decreases and the hydrophilicity increases as the cloud point becomes higher. Examples of measurement of cloud points of polymer components of this invention in their aqueous solutions will be given herein as Referential Examples.

A polymer having a low cloud point has high hydrophobicity. Therefore, it can adsorb more adsorbate. There is thus a problem on the desorbability of the adsorbate at low temperatures. Where the cloud point of a polymer is high on the other hand, its hydrophobicity is low and it can generally adsorb less adsorbate. However, the desorbability of the adsorbate is better.

As mentioned above, the adsorbability varies depending on the composition of each polymer. Although not applicable to all adsorbents, the maximum value of the adsorbability is about 100 mg per gram of dry adsorbent when adsorption is effected at a high temperature. The adsorbability may be controlled, for example, by changing the surface structure of each adsorbent into a porous structure.

When effecting desorption at a low temperature, it is ideal if the adsorbate can be desorbed in its entirety. However, the desorption cannot be completely achieved in some instances as the desorption is somewhat related to the adsorbability.

The composition of each polymer may thus be chosen depending on whether the importance is placed on adsorption or on desorption.

Although it has not been elucidated to date why the N,N-disubstituted (meth)acrylamide polymers in the adsorbents show better adsorbability than N-mono-substituted (meth)acrylamide polymers, they show the following differences when converted into aqueous solutions. When N,N-diethylacrylamide and N-n-butylacrylamide having the same molecular formula are compared with each other, the former is formed into a water-soluble polymer having a cloud point of 35°C while the latter is turned to a water-insoluble polymer. The cloud point of the former compound is substantially comparable with the cloud point, i.e., 33°C of an N-isopropylacrylamide polymer as an N-mono-substituted (meth)acrylamide. Even among N,N-disubstituted (meth)acrylamides, the cloud point increases further to 51°C in the case of N-acryloylpyrrolidine, in which the substituent groups form a ring via an amido group. As mentioned above, the difference in properties shown in aqueous solutions between the N-mono-substituted compound and the N,N-disubstituted compound appears to give some influence on their adsorption properties of the polymers although they have exactly the same constituent elements.

Among properties of polymers other than described above, ionic property (which may be either cationic or anionic) may be introduced into such polymers by copolymerizing N,N-disubstituted (meth)acrylamides with the above-described ionic monomers so that two types of mechanisms, i.e., both ionic and hydrophobic interactions can be used in combination. Accordingly, more selective adsorption and easier desorption are feasible, thereby making it possible to conduct separation in a state less contaminated by an acid, base, electrolyte or the like. It is also possible to use two types of mechanisms, i.e., both affinity interaction and hydrophobic interaction for adsorption and separation by copolymerizing an N-(ω-glycidoxyalkyl)acrylamide such as N,N-diglycidylacrylamide or N-(4-glycidoxybutyl)acrylamide with an N,N-disubstituted (meth)acrylamide to introduce highly-reactive epoxy groups into the resultant polymer and then reacting an amino acid, a protein such as an antigen, antibody, or an enzyme, a colorant or the like to the polymer. Therefore, more selective adsorption and easier desorption are feasible. In this case, separation is feasible also in a state less contaminated by an acid, base, electrolyte or the like.

The adsorbent employed by this invention has the following advantageous effects:

(1) Since it can adsorb upon heating and desorb upon cooling as has been described above, adsorption and desorption can be effected while maintaining the pH and composition such as electrolyte in each solution as they are. It is hence possible to minimize contamination by an acid, base, electrolyte and/or the like and at the same time to separate a valuable material or substance in a purer state.

(2) Since it makes use of a polymer of an N,N-disubstituted (meth)acrylamide as a base material, it is an adsorbent having excellent mechanical strength so that it may be used over a wide pH range, at a high electrolyte concentration, and even in organic solvents, to say nothing of water.

(3) Separation may be effected with better efficiency in accordance with two or more different mechanisms by introducing ionic groups or a protein or the like which can induce an affinity interaction.

Adsorbents employed in this invention have an extremely wide range of specific utility, including for example (1) adsorption and separation of vitamins, antibodies, enzymes, steroid antibiotics and other physiologically-active substances from fermentation liquors, (2) decolorization of a variety of aqueous saccharide solutions, (3) separation of aliphatic and aromatic carboxylic acids, sulfonic acid and phosphoric acid esters, (4) decolorization of various saccharified starch liquors, (5) as packing materials for gas chromatography and liquid chromatography, (6) removal of phenols, (7) separation of various surface-activating materials, (8) adsorption and separation of various perfumes, (9) decolorization of pulp mill waster water, and (10) decolorization and purification of various chemical substances such as drugs and agricultural chemicals.

The present invention will hereinafter be described in further detail by the following Examples.

Example 1

After adiabatically polymerizing a 30% aqueous solution of N-acryloylpyrrolidine which contained 0.5 wt.% of N,N'-methylenebisacrylamide, the resultant gel was chopped into small pieces and then dried. Thereafter, the thus-dried gel was crushed and a 20—100 mesh fraction was collected as a sample. To 50 ml of an aqueous solution containing 310 ppm of phenol, 1.0 g of the sample powder was added. After stirring the mixture for 15 minutes at a predetermined temperature, it was allowed to stand for 5 minutes. By measuring the absorbance of its supernatant at 254 nm, the amount of adsorbed phenol was calculated. The adsorbed amount per gram of the sample powder was measured at various temperatures, resulting in 1.30 mg at 0.5°C, 2.00 mg at 25°C, 2.25 mg at 40°C, 3.50 mg at 60°C and 4.10 mg at 80°C. When the temperature was lowered again to 0.5°C thereafter, it was 1.35 mg.

Examples 2—5

With the copolymer compositions given in Table 1, sample powders were obtained by conducting polymerization and crushing in the same manner as in Example 1. Following the procedure of Example 1, the amount of adsorbed phenol per gram of each sample powder was measured. Results are shown in Table 1. The sample powders were microscopically observed both before and after the measurement. The microscopic observation did not find any sample fracture developed by the repetition of heating and cooling or the stirring.

Table 1

| Ex. | Composition of copolymer (wt.%) | Amount of adsorbed phenol per gram of sample (mg) | | | | | |
|---|---|---|---|---|---|---|---|
| | | 0.5°C | 25°C | 40°C | 60°C | 80°C | 0.5°C |
| 2 | N-acryloylpyrrolidine(98)/ N,N'-methylenebisacrylamide(2) | 1.20 | 1.75 | 2.06 | 3.36 | 3.81 | 1.30 |
| 3 | N-acryloylpyrrolidine(73.5)/ N-acryloylpiperidine(24.5)/ N,N'-methylenebisacrylamide(2) | 1.00 | 2.00 | 3.29 | 4.79 | 4.94 | 1.25 |
| 4 | N-acryloylpyrrolidine(49) N-acryloylpiperidine(49)/ N,N'-methylenebisacrylamide(2) | 1.10 | 4.10 | 6.45 | 6.80 | 6.30 | 1.35 |
| 5 | N-acryloylpyrrolidine(24.5)/ N-acryloylpiperidine(73.5)/ N,N'-methylenebisacrylamide(2) | 0.35 | 7.20 | 8.00 | 7.40 | 6.65 | 0.85 |

Examples 6—9

Using the same sample powders of Examples 2—5 and an aqueous solution which contained 296 ppm of benzoic acid, the amounts of adsorbed benzoic acid per gram of the respective sample powders were measured in the same manner as in Example 1. Results are given in Table 2.

Examples 10—13

Using the same sample powders of Examples 2—5 and an aqueous solution which contained 318 ppm of decaethyleneglycol mono(p-nonylphenyl) ether (NP—10), the amounts of adsorbed NP—10 per gram of the respective sample powders were measured in the same manner as in Example 1. Results are given in Table 3.

Table 2

| Ex. | Composition of copolymer (wt.%) | Amount of adsorbed benzoic acid per gram of sample (mg) | | | | | |
|---|---|---|---|---|---|---|---|
| | | 0.5°C | 25°C | 40°C | 60°C | 80°C | 0.5°C |
| 6 | N-acryloylpyrrolidine(98)/<br>N,N'-methylenebisacrylamide(2) | 1.00 | 1.65 | 2.20 | 3.45 | 3.95 | 1.20 |
| 7 | N-acryloylpyrrolidine(73.5)/<br>N-acryloylpiperidine(24.5)/<br>N,N'-methylenebisacrylamide(2) | 1.10 | 2.40 | 4.10 | 5.30 | 5.20 | 1.40 |
| 8 | N-acryloylpyrrolidine(49)<br>N-acryloylpiperidine(49)/<br>N,N'-methylenebisacrylamide(2) | 1.20 | 5.12 | 7.03 | 7.28 | 6.42 | 1.41 |
| 9 | N-acryloylpyrrolidine(24.5)/<br>N-acryloylpiperidine(73.5)/<br>N,N'-methylenebisacrylamide(2) | 0.65 | 8.54 | 9.19 | 8.49 | 7.39 | 1.05 |

Table 3

| Ex. | Composition of copolymer (wt.%) | Amount of adsorbed NP-10 per gram of sample (mg) | | | | | |
|---|---|---|---|---|---|---|---|
| | | 0.5°C | 25°C | 40°C | 60°C | 80°C | 0.5°C |
| 10 | N-acryloylpyrrolidine(98)/ N,N'-methylenebisacrylamide(2) | 0.05 | 0.15 | 1.10 | 3.90 | 9.10 | 0.07 |
| 11 | N-acryloylpyrrolidine(73.5)/ N-acryloylpiperidine(24.5)/ N,N'-methylenebisacrylamide(2) | 0.10 | 1.05 | 3.30 | 9.75 | 9.70 | 0.13 |
| 12 | N-acryloylpyrrolidine(49) N-acryloylpiperidine(49)/ N,N'-methylenebisacrylamide(2) | 0.12 | 1.90 | 10.61 | 11.41 | 11.36 | 0.16 |
| 13 | N-acryloylpyrrolidine(24.5)/ N-acryloylpiperidine(73.5)/ N,N'-methylenebisacrylamide(2) | 0.03 | 4.15 | 9.55 | 13.00 | 13.20 | 0.05 |

Example 14

Using the same sample powder as that used in Example 5 and an aqueous solution which contained 464 ppm of DL-phenylalanine and has been adjusted to ph 3 with hydrochloric acid, the amount of adsorbed DL-phenylalanine per gram of the sample powder was measured in the same manner as in Example 1. Results were 0.10 mg at 0.5°C, 5.63 mg at 25°C, 8.63 mg at 40°C, 11.00 mg at 60°C and 12.58 mg at 80°C. When the temperature was lowered again to 0.5°C thereafter, it was 0.17 mg.

Examples 15 and 16

Using the same sample powders as those used in Examples 4 and 5 and an aqueous solution which contained 407 ppm of bovine serum albumin (BSA), the amounts of adsorbed BSA per gram of the respective sample powders were measured in the same manner as in Example 1. Results are given in Table 4.

Examples 17 and 18

Using the same sample powders as those used in Examples 4 and 5 and an aqueous solution which contained 319 ppm of chloroamphenicol, the amounts of adsorbed chloramphenicol per gram of the respective sample powders were measured in the same manner as in Example 1. Results are given in Table 5.

Comparative Example 1

With a 30% aqueous solution of N-isopropylacrylamide which contained 1.0 wt.% of N,N'-methylenebisacrylamide, a sample powder was obtained by conducting polymerization and crushing in the same manner as in Example 1. Following the procedure of Example 17, the amount of adsorbed chloramphenicol per gram of the sample powder was measured. Results were 0.03 mg at 0.5°C, 0.14 mg at 25°C, 0.92 mg at 40°C, 1.28 mg at 60°C and 0.95 mg at 80°C. When the temperature was lowered again to 0.5°C thereafter, it was 0.11 mg.

Examples 19 and 20

Using the same sample powders as those used in Examples 4 and 5 and a aqueous solution which had been adjusted to pH 4 with hydrochloric acid and contained 31 ppm of Methyl Orange, the amounts of adsorbed Methyl Orange per gram of the respective sample powders were measured in the same manner as in Example 1. Results are shown in Table 6.

Table 4

| Ex. | Composition of copolymer (wt.%) | Amount of adsorbed BSA per gram of sample (mg) | | | | | | |
|---|---|---|---|---|---|---|---|---|
| | | 0.5°C | 10°C | 15°C | 20°C | 25°C | 30°C | 0.5°C |
| 15 | N-acryloylpyrrolidine(49) N-acryloylpiperidine(49)/ N,N'-methylenebisacrylamide(2) | 0.09 | 1.72 | 2.31 | 2.97 | 7.00 | 7.53 | 0.22 |
| 16 | N-acryloylpyrrolidine(24.5)/ N-acryloylpiperidine(73.5)/ N,N'-methylenebisacrylamide(2) | 0.09 | 5.15 | 13.66 | 15.07 | 15.88 | 16.03 | 0.20 |

Table 5

| Ex. | Composition of copolymer (wt.%) | Amount of adsorbed chloramphenicol per gram of sample (mg) | | | | | |
|---|---|---|---|---|---|---|---|
| | | 0.5°C | 25°C | 40°C | 60°C | 80°C | 0.5°C |
| 17 | N-acryloylpyrrolidine(49) N-acryloylpiperidine(49)/ N,N'-methylenebisacrylamide(2) | 0.14 | 1.32 | 3.73 | 5.18 | 4.44 | 0.19 |
| 18 | N-acryloylpyrrolidine(24.5)/ N-acryloylpiperidine(73.5)/ N,N'-methylenebisacrylamide(2) | 0.16 | 2.93 | 5.80 | 6.76 | 5.40 | 0.18 |

Table 6

| Ex. | Composition of copolymer (wt.%) | Amount of adsorbed Methyl Orange per gram of sample (mg) | | | | | |
|---|---|---|---|---|---|---|---|
| | | 0.5°C | 25°C | 40°C | 60°C | 80°C | 0.5°C |
| 19 | N-acryloylpyrrolidine(49) N-acryloylpiperidine(49)/ N,N'-methylenebisacrylamide(2) | 0.06 | 0.56 | 0.69 | 0.55 | 0.29 | 0.11 |
| 20 | N-acryloylpyrrolidine(24.5)/ N-acryloylpiperidine(73.5)/ N,N'-methylenebisacrylamide(2) | 0.05 | 0.68 | 0.80 | 0.58 | 0.38 | 0.09 |

Example 21

A 30% soluton of N,N-dimethylacrylamide, which contained 2.0 wt% of N,N'-methylenebisacrylamide, in N,N-dimethylformamide was poured in a Dewar flask. After sweeping the solution with nitrogen gas, azoisobutyronitrile was added to an amount of 1.5% at 30°C and the contents were then subjected to adiabatic polymerization. The thus-obtained gel was chopped into small pieces and dried at 120°C. Then, it was crushed and a 20—100 mesh fraction was collected as a sample. Using the sample powder, the amount of adsorbed phenol per gram of the sample powder was measured at various temperatures in the same manner as in Example 1. It was 1.70 mg at 0.5°C, 2.15 mg at 25°C, 5.5 mg at 40°C, 6.5 mg at 60°C and 7.0 mg at 80°C. When the temperature was lowered again to 0.5°C thereafter, it was 1.65 mg.

Example 22

A sample powder was obtained in exactly the same manner as in Example 1, using a 30% aqueous solution of N-acryloylmorpholine which contained 2.0 wt.% of N,N'-methylenebisacrylamide. Using the sample powder, the amount of adsorbed phenol per gram of the sample powder was measured at various temperatures in the same manner as in Example 1. It was 1.25 mg at 0.5°C, 3.5 mg at 25°C, 5.7 mg at 40°C, 7.70 mg at 60°C and 8.50 mg at 80°C. When the temperature was lowered again to 0.5°C thereafter, it was 1.20 mg.

Referential Example 1

To a 100 ml, four-necked, round bottom flask, were added with stirring and under a nitrogen gas stream 45.0 g of distilled water and 5.0 g of N-acryloylpyrrolidine, followed by further addition of 0.50 g of ammonium persulfate and 0.23 g of sodium hydrogensulfite. The contents were polymerized at 15—30°C for 4 hours.

The resultant aqueous polymer solution was placed in a testing tube having an inner diameter of 15 mm, in which a standard thermometer was inserted. The temperature of the solution was gradually raised while stirring it with the thermometer in a temperature-controlled bath. The solution starting clouding at 48.5°C, and at 51°C was clouded so much that the mercury bulb of the thermometer was no longer visible. Even when heated further beyond the above temperature, the aqueous solution remained in the stable cloudy state. When the solution was progressively cooled, it became clear at temperatures below the cloud point.

Referential Examples 2—41

Polymerization was conducted in exactly the same manner as in Reference Example 1 except that the monomer combinations given in Tables 7, 8, 9 and 10 were used. However, the amounts of ammonium persulfate and sodium hydrogensulfite were each reduced to one half in Referential Examples 2, 3, 5, 16 and 20—41. Using the thus-obtained aqueous polymer solutions, their initiation temperatures of clouding and cloud points were measured in exactly the same manner as in Referential Example 1. The term "cloud points" means the temperatures at which the mercury bulb of the thermometer became no longer visible due to clouding. Results are shown in Tables 7, 8, 9 and 10. By the way, the term "initiation temperatures of clouding" means the temperatures at which their respective solutions started clouding when heated.

In each of the Referential Examples, the clouded solution became colorless and clear by its cooling.

Table 7

| Ref. Ex. | Unsaturated amide (g) | Copolymerized monomer (g) | Initiation temp. of clouding (°C) | Cloud point (°C) |
|---|---|---|---|---|
| 2 | N-acryloylpyrrolidine (1.25) | N,N-diethylacrylamide (1.25) | 42 | 43 |
| 3 | N-acryloylpyrrolidine (1.88) | ethyl acrylate (0.62) | 39 | 50 |
| 4 | N-acryloylpiperidine (5.0) | - | 6 | 10 |
| 5 | N-acryloylpyrrolidine (1.88) | N-methacryloylpyrrolidine (0.62) | 72 | 75 |
| 6 | N-acryloylpiperidine (1.75) | acrylamide (1.25) | 39 | 45 |
| 7 | N-acryloylpiperidine (2.25) | N,N-dimethylacrylamide (0.75) | 25 | 28 |
| 8 | N-acryloylpiperidine (1.50) | N,N-dimethylacrylamide (1.50) | 57 | 64 |
| 9 | N-acryloylpiperidine (2.25) | N-ethylacrylamide (0.75) | 16 | 17.5 |
| 10 | N-acryloylpiperidine (1.50) | N-ethylacrylamide (1.50) | 31 | 33 |
| 11 | N-acryloylpiperidine (0.75) | N-ethylacrylamide (2.25) | 58 | 62 |

Table 8

| Ref. Ex. | Unsaturated amide (g) | Copolymerized monomer (g) | Initiation temp. of clouding (°C) | Cloud point (°C) |
|---|---|---|---|---|
| 12 | N-acryloylpyrrolidine (2.25) | N-n-butylacrylamide (0.75) | 33 | 37 |
| 13 | N-acryloylpyrrolidine (3.75) | N-n-propylacrylamide (1.25) | 49 | 52 |
| 14 | N-acryloylpyrrolidine (2.50) | N-n-propylacrylamide (2.50) | 38 | 40 |
| 15 | N-acryloylpyrrolidine (1.25) | N-n-propylacrylamide (3.75) | 34 | 35 |
| 16 | N-acryloylpyrrolidine (2.37) | methyl methacrylate (0.13) | 40 | 54 |
| 17 | N-acryloylpyrrolidine (1.87) | N-acryloylpiperidine (0.63) | 40 | 41 |
| 18 | N-acryloylpyrrolidine (1.25) | N-acryloylpiperidine (1.25) | 23 | 24 |
| 19 | N-acryloylpyrrolidine (0.63) | N-acryloylpiperidine (1.87) | 19 | 20 |
| 20 | N-acryloylpyrrolidine (1.88) | N-methacryloylpiperidine (0.62) | 72 | 74 |
| 21 | N-acryloylpyrrolidine (2.45) | N-acryloylazacycloundecane (0.05) | 60 | 62 |

Table 9

| Ref. Ex. | Unsaturated amide (g) | Copolymerized monomer (g) | Initiation temp. of clouding (°C) | Cloud point (°C) |
|---|---|---|---|---|
| 22 | N-acryloylpiperidine (2.38) | sodium acrylate (0.12) | 2 | 2.5 |
| 23 | N-acryloylpiperidine (2.38) | APPS-Na* (0.12) | 2.5 | 3 |
| 24 | N-acryloylpiperidine (2.38) | AMPS-Na** (0.12) | 2.5 | 3 |
| 25 | N-acryloylpiperidine (1.25) | N-vinylpyrrolidone (1.25) | 3.5 | 6.5 |
| 26 | N-acryloylpyrrolidine (1.88) | N,N-diethylmethacrylamide (0.63) | 73.5 | 76 |
| 27 | N-acryloylpiperidine (2.25) | N-acryloylhexahydroazepine (0.25) | 47.5 | 49.5 |
| 28 | N-acryloylhexahydro-azepine (1.0) | N-ethylmethacylamide (1.5) | 33 | 38 |

* APPS-Na: Sodium 2-acrylamido-2-phenylpropanesulfonate
** AMPS-Na: Sodium 2-acrylamido-2-methylpropanesulfonate

Table 10

| Ref. Ex. | Unsaturated amide (g) | Copolymerized monomer (g) | Initiation temp. of clouding (°C) | Cloud point (°C) |
|---|---|---|---|---|
| 29 | N,N-diethylacrylamide (5.00) | - | 34.5 | 34.7 |
| 30 | N,N-diethylacrylamide (1.50) | N-ethylacrylamide (1.00) | 34.5 | 36 |
| 31 | N,N-diethylacrylamide (2.25) | methyl methacrylate (0.25) | 29 | 34 |
| 32 | N,N-diethylacrylamide (2.25) | N-n-butylacrylamide (0.25) | 18 | 20 |
| 33 | N,N-diethylacrylamide (2.25) | APPS-Na* (0.25) | 40.5 | 42 |
| 34 | N,N-diethylacrylamide (1.75) | N-vinylpyrrolidone (0.75) | 30 | 32 |
| 35 | N,N-diethylacrylamide (0.63) | N-n-propylacrylamide (1.88) | 23.5 | 24.5 |
| 36 | N,N-diethylacrylamide (1.25) | N-n-propylacrylamide (1.25) | 23 | 25 |
| 37 | N,N-diethylacrylamide (1.88) | N-n-propylacrylamide (0.63) | 27.5 | 28.5 |
| 38 | N-n-propylmethacrylamide (0.63) | N,N-diethylacrylamide (1.88) | 26.5 | 27.5 |
| 39 | N-n-propylmethacrylamide (1.25) | N,N-diethylacrylamide (1.25) | 28.5 | 30 |
| 40 | N-n-propylmethacrylamide (1.88) | N,N-diethylacrylamide (0.63) | 31 | 31 |
| 41 | N,N-diethylacrylamide (1.25) | N-isopropylacrylamide (1.25) | 22 | 23 |

* APPS-Na: sodium 2-acrylamido-2-phenylpropanesulfonate

**Claims**

1. An adsorption-desorption method for the separation of water soluble organic compounds from an aqueous solution containing the same wherein the water soluble organic compounds are selected from (a) compounds containing active hydrogen atoms, which are substituted by one or more hydroxyl, carboxyl, sulfonic acid, phosphoric acid or mercapto groups; and (b) compounds containing a hydrophobic group, which contain, as their hydrophobic groups, cyclic structures such as aromatic rings and long-chain hydrocarbon radicals from an aqueous solution, wherein the method comprises the steps of:

(a) providing a water insolubilized polymeric adsorbent material selected from:

(1) a homopolymer of at least one monomer selected from N-alkyl- or N-alkylene-substituted (meth)acrylamides represented by the following general formula (I) or (II):

$$CH_2{=}C(R_1){-}CO{-}N(R_2)(R_2) \quad (I)$$

wherein

$R_1$ is a hydrogen atom or methyl group and

$R_2$ is a methyl or ethyl group, or

$$CH_2{=}C(R_1){-}CO{-}\overset{\frown}{N\;\;A} \quad (II)$$

wherein

$R_1$ is a hydrogen atom or methyl group and A is a member selected from the group consisting of $—(CH_2)_n—$ or $—(CH_2)_2—O—(CH_2)_2—$ wherein n is an integer of from 4 to 6;

(2) a first copolymer of two or more monomers selected from said (meth)acrylamides, and

(3) a second copolymer of at least one monomer selected from said (meth)acrylamides and one or more monomers other than said (meth)acrylamides and copolymerizable therewith;

(b) bringing said aqueous solution containing said water soluble organic compounds into contact with said polymeric adsorbent material at an adsorbing temperature in the range of 10 to 100°C for a time sufficient to allow said water soluble organic compounds to be adsorbed from said aqueous solution onto said polymeric adsorbent material;

(c) separating said aqueous solution from said polymeric adsorbent material containing said adsorbed water soluble organic compounds; and

(d) desorbing said water soluble organic compounds from said polymeric adsorbent material by contacting said polymeric adsorbent material with a desorbing aqueous solution at a desorbing temperature in the range of −10 to +50°C and which is at least 5°C lower than the adsorbing temperature.

2. A method according to claim 1, wherein the polymeric adsorbent material is added to said aqueous solution at the said adsorbing temperature under agitation in a container thereby causing said water soluble organic compounds to contact said adsorbent material and be adsorbed thereon; separating said aqueous solution from said adsorbent material having adsorbed thereon said water soluble organic compounds; and desorbing said organic compounds from said polymeric adsorbent material by bringing together said polymeric adsorbent material and said desorbing aqueous solution at the said desorbing temperature under agitation.

3. A method according to claim 1, comprising the steps of:

(a) placing said polymeric adsorbent material in a fixed bed,

(b) passing said aqueous solution containing said water soluble organic compounds maintained at the said adsorbent temperature through said fixed bed whereby said water soluble organic compounds are adsorbed onto said polymeric adsorbent material; and

(c) passing said desorbing aqueous solution maintained at the said desorbing temperature through said fixed bed thereby desorbing said water soluble organic compounds from said polymeric adsorbent material.

4. A method according to claim 1, comprising the steps of:

(a) passing said polymeric adsorbent material through said aqueous solution containing said water soluble organic compounds maintained at the said adsorbent temperature whereby said water soluble organic compounds are adsorbed onto said polymeric adsorbent material; and

(b) subsequently passing said polymeric adsorbent material containing adsorbed water soluble organic compounds through said desorbing aqueous solution maintained at the said desorbing temperature thereby desorbing said water soluble organic compounds from said polymeric adsorbent material.

5. A method according to any preceding claim, wherein the adsorbent material used is:

(1) a homopolymer one of N-alkylene-substituted (meth)acrylamides represented by the general formula (II):

$$CH_2=\overset{R_1}{\overset{|}{C}}-CO-N\bigcirc A \quad (II)$$

wherein

$R_1$ is a hydrogen atom or methyl group and A is a member selected from the group consisting of $-(CH_2)_n-$ or $-(CH_2)_2-O-(CH_2)_2-$ wherein n is an integer of from 4 to 6;

(2) a first copolymer of two or more N-alkylene-substituted (meth)acrylamide monomers, and

(3) a second copolymer of at least one monomer selected from said N-alkylene-substituted (meth) acrylamides and one or more monomers other than said N-alkylene-substituted (meth)acrylamides and copolymerizable therewith.

6. A method according to claim 5, wherein the copolymer is N-acryloxy-pyrrolidine and N-acryloyl piperidine.

7. A method according to any preceding claim, wherein the active hydrogen atoms are present in the form of (1) one or more hydroxyl groups substituted to an aromatic ring or an aliphatic hydrocarbon radical or (2) one or more carboxyl groups substituted to an aromatic hydrocarbon radical or an aliphatic hydrocarbon radical.

8. A method according to claim 1, wherein compounds containing a hydrophobic group are selected from surfactants, proteins, physioligically-active substances and colorants.

9. A method according to claim 1, wherein the water soluble organic compound contains one or more hydroxyl groups substituted to an aromatic ring, the water soluble organic compound for example being selected from phenol, cresol, xylenol, hydroquinone, benzenetriol, salicyl alcohol, naphthol, anthrol, nonylphenol, carvacrol, vinylphenol, isopropenylphenol, diphenylphenol, biphenyldiol, napthylphenol, phenylnaphthol, p-cumylphenol and 4,4'-dihydroxydiphenylsulfon.

10. A method according to claim 1, wherein the water soluble organic compound contains one or more hydroxyl groups substituted to an aliphatic hydrocarbon radical, the organic compound for example being a saturated aliphatic alcohol.

11. A method according to claim 8, wherein the water soluble organic compound is a surfactant for example selected from anionic, nonionic, cationic and amphoteric surfactants.

12. A method according to claim 8, wherein the water soluble organic compound is a protein having a molecular weight in the range of from 1,000 to 1,000,000.

13. A method according to claim 8, wherein the water soluble organic compound is a physiologically-active substance, for example selected from antibiotics, hypnosedatives, antiepileptics, antipyretics, analgesics, antiphlogistics, mental and nervous drugs, obtundents, muscle relaxants, autonomic drugs, sense organ drugs, antihistamines, cardiotonics, antiarrhythmics, hypotensor and diuretic drugs, vasodilators, therapeutic drugs for arteriosclerosis, anhelation drugs, antibechic and expectorant drugs, digestive organ drugs, adrenal hormone preparations, sex hormone and other hormone preparations, bacteriocidal and disinfectant agents, vitamin preparations, nourishing, antasthenic and alternative agents, anticoagulants, stiptics, liver drugs, therapeutic drugs for intoxication, enzyme preparations, antidiabetics, antimalignant tumor drugs, chemotherapeutic drugs, biological preparations, anthelmintics, antiprotozoals and narcotics.

14. A method according to claim 8, wherein the water soluble organic compound is a colorant, for example selected from dyes, organic pigments, coloring agents and titration indicators.

**Patentansprüche**

1. Ein Adsorptions-Desorptions-Verfahren für die Trennung von wasserlöslichen organischen Verbindungen von einer wäßrigen Lösung, die dieselben enthält, wobei die wasserlöslichen organischen Verbindungen aus (a) Verbindungen, die aktive Wasserstoffatome enthalten, die durch eine oder mehrere Hydroxyl-, Carboxyl-, Sulfosäure-, Phosphorsäure- oder Mercaptogruppe(n) substituiert sind, und (b) Verbindungen, die eine hydrophobe Gruppe enthalten, die als ihre hydrophoben Gruppen cyclische Strukturen wie aromatische Ringe und langkettige Kohlenwasserstoffreste enthalten, ausgewählt sind, wobei das Verfahren die folgenden Schritte umfaßt:

(a) Schaffen eines wasserunlöslich gemachten polymeren Adsoprtionsmaterials, das ausgewählt ist aus:

(1) einem Homopolymer von wenigstens einem Monomer, das aus N-Alkyl- oder N-Alklensubstituierten (Meth)acrylamiden ausgewählt ist, die durch die folgende allgemeine Formel (I) oder (II) dargestellt werden:

$$CH_2=\overset{R_1}{\overset{|}{C}}-CO-N\begin{matrix} R_2 \\ R_2 \end{matrix} \quad (I)$$

worin $R_1$ ein Wasserstoffatom oder eine Methylgruppe ist und $R_2$ eine Methyl- oder Ethylgruppe ist, oder

$$CH_2=C(R_1)-CO-N\langle A\rangle \qquad (II)$$

worin $R_1$ Wasserstoffatom oder eine Methylgruppe ist und A ein Glied ist, das aus der Gruppe ausgewählt ist, die aus $—(CH_2)_n—$ oder $—(CH_2)_2—O—(CH_2)_2—$ besteht, worin n eine ganze Zahl von 4 bis 6 ist,

(2) einem ersten Copolymer von zwei oder mehr Monomeren, die aus den besagten (Meth)-acrylamiden ausgewählt sind, und

(3) einem zweiten Copolymer von wenigstens einem Monomer, das aus den besagten (Meth)acrylamiden ausgewählt ist, und einem oder mehreren Monomeren, das ein anderes bzw. die andere als die genannten (Meth)acrylamide ist bzw. sind und damit copolymerisierbar ist bzw. sind;

(b) in Kontaktbringen der wäßrigen Lösung, die die wasserlöslichen organischen Verbindungen enthält, mit dem polymeren Adsorptionsmaterial bei einer Adsorptionstemperatur in dem Bereich von 10 bis 100°C über ein Zeit, die ausreichend ist, um die wasserlöslichen organischen Verbindungen aus der wäßrigen Lösung auf dem polymeren Adsorptionsmaterial adsorbieren zu lassen;

(c) Trennen der wäßrigen Lösung von dem polymeren Adsorptionsmaterial, das die adsorbierten wasserlöslichen organischen Verbindungen enthält, und

(d) Desorbieren der wasserlöslichen organischen Verbindungen von dem polymeren Adsorptionsmaterial durch in Kontaktbringen des polymeren Adsorptionsmateirals mit einer desorbierenden wäßrigen Lösung bei einer Desorptionstemperatur im Bereich von −10 bis +50°C und die wenigstens 5°C niedriger als die Adsorptionstemperatur ist.

2. Verfahren nach Anspruch 1, bei dem das polymere Adsorptionsmaterial zu der wäßrigen Lösung bei der besagten Adsorptionstemperatur unter Rühren in einem Behälter zugegeben wird, um dadurch zu bewirken, daß die wasserlöslichen organischen Verbindungen das Adsorptionsmaterial kontaktieren und daran adsorbiert werden; die wäßrige Lösung von dem Adsorptionsmaterial, an dem die wasserlöslichen organischen Verbindungen adsorbiert sind, abgetrennt wird und die organischen Verbindungen vom dem polymeren Adsorptionsmaterial desorbiert werden, indem das polymere Adsorptionsmaterial und die desorbierende wäßrige Lösung bei der besagten Desorptionstemperatur unter Rühren zusammengebracht werden.

3. Verfahren nach Anspruch 1, das die folgenden Schritte umfaßt:

(a) Einbringen des polymeren Adsorptionsmaterials in ein Festbett,

(b) Hindurchleiten der wäßrigen Lösung, die die wasserlöslichen organischen Verbindungern enthält und auf der besagten Adsorptionstemperatur gehalten wird, durch das Festbett, wodurch die wasserlöslichen organischen Verbindungen auf dem polymeren Adsorptionsmaterial adsorbiert werden, und

(c) Hindurchleiten der desorbierenden wäßrigen Lösung, die auf der besagten Desorptionstemperatur gehalten wird, durch das Festbett, um dadurch die wasserlöslichen organischen Verbindungen von dem polymeren Adsorptionsmaterial zu desorbieren.

4. Verfahren nach Anspruch 1, das die folgenden Schritte umfaßt:

(a) Hindurchleiten des polymeren Adsorptionsmaterials durch die wäßrige Lösung, die die wasserlöslichen organischen Verbindungen enthält und auf der besagten Adsorptionstemperatur gehalten wird, wodurch die wasserlöslichen organischen Verbindungen auf dem polymeren Adsorptionsmaterial adsorbiert werden; und

(b) nachfolgendes Hindurchleiten des polymeren Adsorptionsmaterials, das die wasserlöslichen organischen Verbindungen in adsorbierter Form enthält, durch die desorbierende wäßrige Lösung, die auf der besagten Desorptionstemperatur gehalten wird, um dadurch die Wasserlöslichen organischen Verbindungen von dem polymeren Adsorptionsmaterial zu desorbieren.

5. Verfahren nach einem der vorhergehenden Ansprüche, bie dem das verwendete Adsorptionsmaterial folgendes ist:

(1) ein Homopolymer von einem der N-alkylen-substituierten (Meth)acrylamide, die durch die allgemeine Formel (II) dargestellt werden:

$$CH_2=C(R_1)-CO-N\langle A\rangle \qquad (II)$$

worin $R_1$ Wassererstoffatom oder eine Methylgruppe ist und A ein Glied ist, das aus der Gruppe ausgewählt ist, die aus $—(CH_2)_n—$ oder $—(CH_2)_2—O—(CH_2)_2—$ besteht, worin n eine ganze Zahl von 4 bis 6 ist;

(2) ein ersten Copolymer von zwei oder mehr N-alkylen-substituierten (Meth)acrylamid-Monomeren und

(3) ein zweites Copolymer von wenigstens einem Monomer, ds aus den besagten N-alkylen-substituierten (Meth)acrylamiden ausgewählt ist, und einem oder mehreren Monomeren, das ein anderes bzw. die andere als die besagten N-alkylen-substituierten (Meth)acrylamide ist bzw. sind und damit copolymerisierbar ist bzw. sind.

6. Verfahren nach Anspruch 5, bei dem das Copolymer N-acryloyl-pyrrolidin und N-acryloyl-piperidin ist.

7. Verfahren nach einem der vorhergehenden Ansprüche, bei dem die aktiven Wasserstoffatome in der Form von (1) einer Hydroxylgruppe oder mehreren Hydroxylgruppen, die zu einem aromatischen Ring oder einem aliphatischen Kohlenwasserstoffrest substituiert sind, oder (2) einer Carboxylgruppe oder mehreren Carboxylgruppen, die zu einem aromatischen Kohlenwasserstoffrest oder einem aliphatischen Kohlenwasserstoffrest substituiert sind, vorliegen.

8. Verfahren nach Anspruch 1, bei dem Verbindungen, die eine hydrophobe Gruppe enthalten, aus oberflächenaktiven Mitteln, Proteinen, physiologisch aktiven Substanzen und Farbmitteln ausgewählt sind.

9. Verfahren nach Anspruch 1, bei dem die wasserlösliche organische Verbindung eine Hydroxylgruppe oder mehrere Hydroxylgruppen enthält, die zu einem aromatischen Ring substituiert sind, wobei die wasserlösliche organische Verbindung beispielsweise aus Phenol, Cresol, Xylenol, Hydrochinon, Trihydroxybenzol (Pyrogallol), Salicylalkohol, Naphthol, Anthrol, Nonylphenol, Karvakrol, Vinylphenol, Isopropenylphenol, diphenylphenol, Biphenyldiol, Naphthylphenol, Phenylnaphthol, p-Cumylphenol und 4,4'-Dihydroxydiphenylsulfon ausgewählt ist.

10. Verfahren nach Anspruch 1, bei dem die wasserlösliche organische Verbindung eine Hydroxylgruppe oder mehrere Hydroxylgruppen enthält, die zu einem aliphatischen Kohlenwasserstoffrest substituiert sind, wobei die organische Verbindung z.B. ein gesättigter aliphatischer Alkohol ist.

11. Verfahren nach Anspruch 8, bei dem die wasserlösliche organische Verbindung ein oberflächenaktives Mittel ist, das z.B. aus anionischen, nicht-ionischen, kationsischen und amphoteren oberflächenaktiven Mitteln ausgewählt ist.

12. Verfahren nach Anspruch 8, bei dem die wasserlösliche organische Verbindung ein Protein mit einem Molekulargewicht in dem Bereich von 1000 bis 1000000 ist.

13. Verfahren nach Anspruch 8, bei dem die wasserlösliche organische Verbindung eine physiologisch aktive Substanz ist, die z.B. aus Antibiotika, Schlaf- und Beruhigungsmitteln, Antiepileptika, antipyretischen Mitteln, analgetischen Mitteln, antiphlogistischen Mitteln, Psycho- und Nervenarzneimitteln, schmerzstillenden Mitteln, Muskelrelaxantien, autonomen Arzneimitteln, Sinnesorgan-Arzneimitteln, Antihistaminen, cardiotonischen Mitteln, antiarrhytmischen Mitteln, blutdrucksenkenden und harntreibenden Mitteln, Vasodilatatoren, therapeutischen Arzneimitteln gegen Arteriosklerose, Arzneimittel gegen Atemnot, Hustenmitteln und Expektorantia, Digestionsmitteln, Nebennierenhormon-Zubereitungen, Sexualhormon- und anderen Hormon-Zubereitungen, Bakteriziden und Desinfektionsmitteln, Vitaminzubereitungen, nährenden, kräftigenden und alterierenden Mitteln, Antikoagulantien, stiptischen Mitteln, Leberarzneimitteln, therapeutischen Arzneimitteln gegen Rauschzustände und Vergiftungen, Enzymezubereitungen, Antidiabetika, antimalignen Tumormitteln, Chemotherapeutika, bioligischen Zubereitungen, anthelminthischen Mitteln, protozoenvernichtenden Mitteln und Narkotika ausgewählt ist.

14. Verfahren nach Anspruch 8, bei dem die wasserlösliche organische Verbindung eine farbgebende Substanz ist, die z.B. aus Farbstoffen, organischen Pigmenten, Farbmitteln und Titrationsindikatoren ausgewählt ist.

**Revendications**

1. Un procédé d'adsorption-désorption pour la séparation de composés organiques solubles dans l'eau d'avec une solution aqueuse les contenant où les composés organiques solubles dans l'eau sont choisis parmi (a) les composés contenant des atomes d'hydrogène actif, qui sont substitués par un ou plusieurs groupes hydroxyles, carboxyles, acides sulfoniques, acides phosphoriques ou mercapto; et (b) les composés contenant un groupe hydrophobe, qui contiennent, comme groupes hydrophobes, des structures cycliques, telles que des cycles aromatiques et des radicaux hydrocarbonés à chaîne longue, lequel procédé comprend les stades consistant à:

(a) se pourvoir d'une matière adsorbante polymère insolubilisée choisie parmi:

(1) un homopolymère d'aun moins un monomère choisi parmi les (méth)acrylamides N-alcoyl- ou N-alcoylène-substitués représentés par la formule générale (I) ou (II) suivante:

$$CH_2{=}C(R_1){-}CO{-}N(R_2)(R_2) \qquad (I)$$

dans laquelle $R_1$ est un atome d'hydrogène ou un groupe méthyle et $R_2$ est un groupe méthyle ou éthyle, ou

$$CH_2{=}C(R_1){-}CO{-}N\frown A \qquad (II)$$

dans laquelle $R_1$ est un atome d'hydrogène ou un groupe méthyle et A est choisi dans le groupe constitué de $-(CH_2)_n-$ ou $-(CH_2)_2-O-(CH_2)_2-$ où n est un entier de 4 à 6;

(2) un premier copolymère de deux ou plusieurs monomères choisis parmi lesdits (méth)acrylamides, et

(3) un second copolymère d'au moins un monomère choisi parmi lesdits (méth)acrylamides et d'un ou plusieurs monomères autres que lesdits (méth)acrylamides et copolymérisables avec eux;

(b) mettre ladite solution aqueuse contenant lesdits composés organiques solubles dans l'eau au contact de ladite matière adsorbante polymère à une température d'adsorption dans la gamme de 10 à 100°C pendant un temps suffisant pour permettre que lesdits composés organiques solubles dans l'eau soient adsorbés à partir de ladite solution aqueuse sur ladite matière adsorbante polymère;

(c) séparer ladite solution aqueuse d'avec ladite matière adsorbante polymère contenant lesdits composés organiques solubles dans l'eau adsorbés; et

(d) désorber lesdits composés composés organiques solubles dans l'eau de ladite matière adsorbante polymère par contact de ladite matière adsorbante polymère avec une solution aqueuse désorbante à une température de désorption dans la gamme de −10 à +50°C et qui est au moins inférieure de 5°C à la température d'adsorption.

2. Un procédé selon la revendication 1, dans lequel la matière adsorbante polymère est ajoutée à ladite solution aqueuse à ladite température d'adsorption, sous agitation dans un récipient, de façon à provoquer le contact desdits composés organiques solubles dans l'eau avec ladite matière adsorbante pour qu'ils y soient adsorbés; la séparation de ladite solution aqueuse d'avec ladite matière adsorbante ayant adsorbé lesdits composés organiques solubles dans l'eau; et la désorption desdits composés organiques d'avec ladite matière adsorbante polymère par réunion de ladite matière adsorbante polymère et de ladite solution aqueuse désorbante à ladite température de désorption sous agitation.

3. Un procédé selon la revendication 1, comprenant les stades de:

(a) disposition de ladite matière adsorbante polymère dans un lit fixe,

(b) passage de ladite solution aqueuse contenant lesdits composés organiques solubles dans l'eau maintenue à ladite température d'adsorption à travers ledit lit fixe, pour que lesdits composés organiques solubles dans l'eau soient adsorbés sur ladite matière adsorbante polymère; et

(c) passage de ladite solution aqueuse désorbante maintenue à ladite température de désorption à travers ledit lit fixe pour désorber lesdits composés organiques solubles dans l'eau d'avec ladite matière adsorbante polymère.

4. Un procédé selon la revendication 1 comprenant les stades de:

(a) passage de ladite matière adsorbante polymère à travers ladite solution aqueuse contenant lesdits composés organiques solubles dans l'eau, maintenue à ladite température d'adsorption, pour que lesdits composés organiques solubles dans l'eau soient adsorbés sur ladite matière adsorbante polymère; et

(b) le passage ultérieur de ladite matière adsorbante polymère, contenant les composés organiques solubles dans l'eau adsorbés, à travers ladite solution aqueuse désorbante maintenue à ladite température de désorption pour désorber lesdits composés organiques solubles dans l'eau d'avec la matière adsorbante polymère.

5. Un procédé selon l'une quelconque des revendications précédentes, dans lequel la matière adsorbante utilisée est:

(1) un homopolymère d'un des (méth)acrylamides N-alcoylène-substitués représenté par la formule générale (II):

$$CH_2=\overset{\overset{\displaystyle R_1}{|}}{C}-CO-N\bigcirc A \qquad \text{(II)}$$

dans laquelle $R_1$ est un atome d'hydrogène ou un groupe méthyle et A est choisi dans le groupe constitué de $-(CH_2)_n-$ ou $-(CH_2)_2-O-(CH_2)_2-$ où n est un entier de 4 à 6;

(2) un premier copolymère de deux ou plusieurs (méth)acrylamides N-alcoylène-substitués monomères et

(3) un second copolymère d'au mons un monomère choisi parmi lesdits (méth)acrylamides N-alcoylène-substitués et d'un ou plusieurs monomères, autres que lesdits (méth)acrylamides N-alcoylène-substitués, et copolymérisables avec eux.

6. Un procédé selon la revendication 5, dans lequel le copolymère est fait de N-acryloylpyrrolidine et de N-acryloylpipéridine.

7. Un procédé selon l'une quelconque des revendications précédentes, dans lequel les atomes d'hydrogène actif sont présents sous la forme de (1) un ou plusieurs groupes hydroxyles substitués sur le cycle aromatique ou un radical hydrocarboné aliphatique ou (2) un ou plusieurs groupes carboxyles substitués sur un radical hydrocarboné aromatique ou un radical hydrocarboné aliphatique.

8. Un procédé selon la revendication 1, dans lequel les composés contenant un groupe hydrophobe sont choisis parmi les agents tensio-actifs, les protéines, les substances à activité physiologique et les colorants.

9. Un procédé selon la revendication 1, dans lequel le composé organique soluble dans l'eau contient un ou plusieurs groupes hydroxyles substitués sur un cycle aromatique, le composé organique soluble dans l'eau étant par exemple choisi parmi le phénol, le crésol, le xylénol, l'hydroquinone, le benzènetriol, l'alcool salicylique, le naphtol, l'anthrol, le nonylphénol, le carvacrol, le vinylphénol, l'isopropénylphénol, le diphénylphénol, le biphényldiol le naphtylphénol, le phénylnaphtol, le p-cumylphénol et la 4,4'-dihydroxydiphénylsulfone.

10. Un procédé selon la revendication 1, dans lequel le composé organique soluble dans l'eau contient un ou plusieurs groupes hydroxyles substitués sur un radical hydrocarboné aliphatique, le composé organique étant par exemple un alcool aliphatique saturé.

11. Un procédé selon la revendication 8, dans lequel le composé organique soluble dans l'eau est un agent tensio-actif choisi par exemple parmi les agents tensio-actifs anioniques, non ioniques, cationiques, et amphotères.

12. Un procédé selon la revendication 8, dans lequel le composé organique soluble dans l'eau est une protéine ayant un poids moléculaire dans la gamme de 1 000 à 1 000 000.

13. Un procédé selon la revendication 8, dans lequel le composé organique soluble dans l'eau est une substance à activité physiologique choisie par exemple parmi les antibiotiques, les hypnosédatifs, les anti-épileptiques, les antipyrétiques, les analgésiques, les antiphlogistiques, les médicaments psychotropes et neurotropes, les calmants, les myorelaxants, les médicaments, agissant sur le système nerveux autonome, les médicaments agissant sur les organes sensoriels, les antihistaminiques, les cardiotoniques, les anti-arythmiques, les médicaments hypotenseurs et diurétiques, les vasodilatateurs, les médicaments pour le traitement de l'artériosclérose, les médicaments contre l'essoufflement, les médicaments antitussifs et expectorants, les médicaments agissant sur les organes digestifs, les préparations d'hormone surrénalienne, les préparations d'hormones sexuelles et autres, les agents bactéricides et désinfectants, les préparations vitamiques, les agents nutritifs antiasthéniques et altératifs, les anticoagulants, les astringents, les médicaments hépatiques, les médicaments pour le traitement des intoxications, les préparations enzymatiques, les antidiabétiques, les médicaments contre les tumeurs malignes, les médicaments chimiothérapiques, les préparations biologiques, les anthelminthiques, les antiprotozoaires et les narcotiques.

14. Un procédé selon la revendication 8, dans lequel le composé organique soluble dans l'eau est un colorant choisi parmi par exemple les teinturs, les pigments organiques, les agents colorants et les indicateurs de titrage.